Europäisches Patentamt

European Patent Office

Office européen des brevets

(11) Publication number: **0 176 602
B1**

# (12) EUROPEAN PATENT SPECIFICATION

(45) Date of publication of patent specification: **27.06.90**

(21) Application number: **85901595.0**

(22) Date of filing: **05.04.85**

(86) International application number:
**PCT/JP85/00171**

(87) International publication number:
**WO 85/04749 24.10.85 Gazette 85/23**

(51) Int. Cl.⁵: **G 11 B 33/08**

(54) **OPTICAL DISC PLAYER.**

(30) Priority: **07.04.84 JP 51286/84 u**

(43) Date of publication of application:
**09.04.86 Bulletin 86/15**

(45) Publication of the grant of the patent:
**27.06.90 Bulletin 90/26**

(84) Designated Contracting States:
**AT BE CH DE FR GB LI SE**

(56) References cited:
**FR-A-2 188 227
FR-A-2 218 508
JP-U-51 103 402
US-A-2 756 016**

**PATENTS ABSTRACTS OF JAPAN, vol. 6, no.
125 (P-127)1003r, 10th July 1982; & JP-A-57 50
331 (MATSUSHITA DENKI SANGYO K.K.) 24-03-
1982
PATENTS ABSTRACTS OF JAPAN, vol. 1, no. 32,
29th March 1977, page 1422 E 76; & JP-A-51 126
805 (SONY K.K.) 05-11-1976**

(73) Proprietor: **SONY CORPORATION
7-35 Kitashinagawa 6-Chome Shinagawa-ku
Tokyo 141 (JP)**

(72) Inventor: **YOSHITOSHI, You
Sony Corporation 7-35, Kitashinagawa 6-chome
Shinagawa-ku Tokyo 141 (JP)**
Inventor: **TOYOGUCHI, Tsutomu
Sony Corporation 7-35, Kitashinagawa 6-chome
Shinagawa-ku Tokyo 141 (JP)**
Inventor: **TAKAMATSU, Ryoji
Sony Corporation 7-35, Kitashinagawa 6-chome
Shinagawa-ku Tokyo 141 (JP)**
Inventor: **WATANABE, Yoshiro
Sony Corporation 7-35, Kitashinagawa 6-chome
Shinagawa-ku Tokyo 141 (JP)**

(74) Representative: **Cotter, Ivan John et al
D. YOUNG & CO. 10 Staple Inn
London WC1V 7RD (GB)**

(56) References cited:

**PATENTS ABSTRACTS OF JAPAN, vol. 8, no. 80
(M-289)1517r, 12th April 1984; & JP-A-58 225
238 (MITSUBISHI JUKOGYO K.K.) 27-12-1983**

## Description

This invention relates to optical disc players.

In conventional optical disc players, a high-density signal recorded on disc is scanned by an optical pickup and reproduced. When such a player is mounted and used in a moving object such as an automobile or aircraft, sound omissions tend to occur due to vibrations of the moving object. To prevent this, in a previously proposed optical disc player a mechanism deck acting as a player unit is mounted on a player frame using rubber dampers, thereby absorbing the vibrations. In this case, however, the Q value (i.e. quality factor) in the resonant region of the mechanism deck is inevitably large, and normal operation cannot be maintained.

Japanese Patent Application Publication No. JP—A—57 50331 (an English language abstract of which appears at Patent Abstracts of Japan, Vol. 6, Number 125 (P—127)[1003], 10 July 1982) discloses an optical disc player having a chassis which is disposed in a horizontal plane and on which an optical pickup and a disc table are mounted, a frame, and a plurality of elastic support means resiliently supporting the chassis on the frame such that the chassis is displaceable relative to the frame in all directions. That is, the player of JP—A—57 50331 is similar to the previously proposed player just mentioned, the support means being of elastic materials (or a combination of elastic materials and viscoelastic materials).

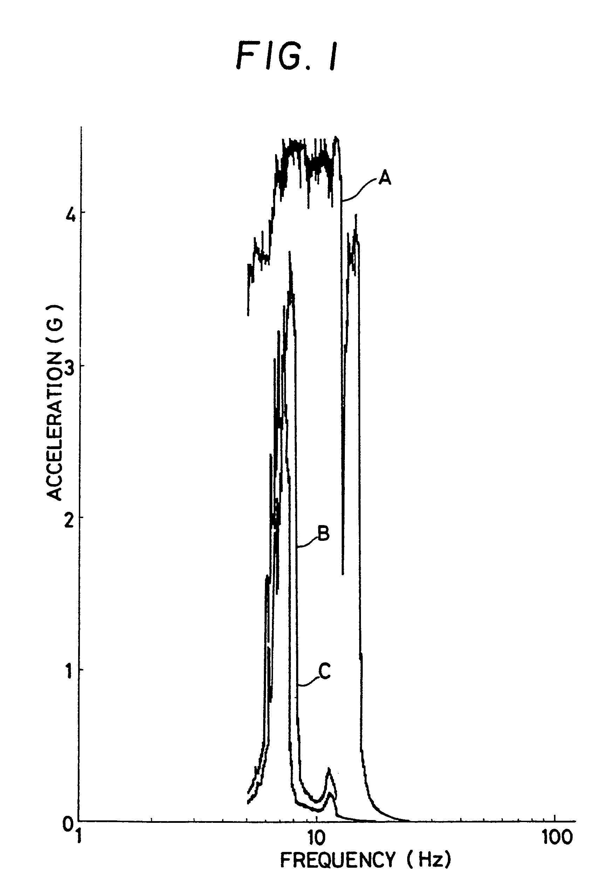

Test results for an optical disc player similar to the previously proposed player described above are illustrated in Figure 1 of the accompanying drawings. Figure 1 shows transfer characteristics of vibrations transferred to a mechanism deck when various mechanical members, such as an optical pickup and a disc table, are mounted on a chassis to constitute the mechanism deck, the mechanism deck is supported on a frame using only coil springs (rather than rubber dampers), and the frame is vibrated. In Figure 1, characteristic curves A, B and C represent accelerations of the mechanism deck encountered upon the application of vibration forces corresponding to acceleration of 0.5G, 0.1G and 0.065G, respectively, where G is the acceleration due to gravity. As shown in Figure 1, a very high Q value is obtained in a resonance region at a frequency of about 10 Hz. For example, vibration frequencies caused by various severe conditions during the operation of an automobile fall between 1 Hz and 125 Hz. Therefore, a demand has arisen for an optical disc player having improved antivibration characteristics.

Japanese Patent Application Publication No JP—A—58 225238, published on 27 December 1983 (an English language abstract of which appears at Patent Abstracts of Japan, Vol. 8, Number 80 (M—289)[1517], 12 April 1984) discloses a hydraulic vibration damper comprising a main body within which a rubber tube is mounted. A viscous oil is sealed in a compartment between the exterior of the tube and the interior of the main body. A rod supporting a vibrating body extends vertically into a compartment or space within the rubber tube and has a disc fixed to its lower end that presses radially against the interior of the tube. Thus, the viscous oil can be made to flow forcibly inside the main body in whichever direction the disc presses the tube under the vibration of the vibrating body, the viscous resistance of the oil providing a vibration-damping action.

UK Patent Application Publication No. GB—A—1 466 876 (which corresponds to French Patent Application Publication No. FR—A—2 218 508) discloses a hydraulic vibration damper which comprises a hollow cylindrical body having an aperture at an upper end and closed by a plate at the lower end. The interior of the body is lined with an elastomeric layer that partly encloses a first chamber or compartment containing silicone oil. A rod extends through the aperture in the body and a flange portion of the rod is sealingly secured to a flange portion of the elastomeric layer. A reduced thickness portion of the elastomeric layer defines, with the interior of the body, a second chamber or compartment for compensating for variations in volume of the first chamber produced by displacement of the rod under a vibration load and by the resulting deformation of the elastomeric layer.

According to the invention there is provided an optical disc player having a chassis which is disposed in a horizontal plane and on which an optical pickup and a disc table are mounted, a frame, and a plurality of elastic support means resiliently supporting the chassis on the frame such that the chassis is displaceable relative to the frame in all directions, the player being characterised by a damper for absorbing vibrations from the frame, the damper comprising:

a rod projecting horizontally from one of the chassis and frame; and

a vessel which is made of rubber and defines a compartment that is filled with silicone oil and sealed, the vessel having a portion that extends horizontally inwardly into the compartment and is surrounded by the silicone oil, said portion having a hollow interior that defines a recess receiving the rod, and the vessel having a flange which is fixed to the other of the chassis and frame, whereby the rod is movable in the silicone oil in all directions together with said portion of the vessel in which the rod is received.

In the above player, the damper comprises a vessel with only one compartment. The silicone oil, which is contained in the compartment and surrounds said inwardly extending portion of the vessel in which the rod is received, is shifted in the event of vibrations whereby fluidic resistance damps the vibration. Therefore, the vessel is compact, but can absorb a large vibration force.

Further, the above player tends not to produce sound omissions since the Q value is small in a resonant region, thereby improving antiresonance characteristics. That is, the slope of the Q value in the resonant region is moderate enough to improve the antivibration characteristics, thus enabling substantial elimination of sound omissions.

The invention will now be further described, by way of illustrative and non-limiting example, with reference to the accompanying drawings, in which:

Figure 1 is a graph showing vibration transfer characteristics of amechanism deck of a previously optical disc player which is supported by a frame using only coil springs;

Figure 2 is a schematic perspective view showing a mechanism deck and a frame of an optical disc player (but not showing a transverse connecting member of the frame) embodying the invention;

Figure 3 is a front view of the mechanism deck and frame taken along a line III—III in Figure 2;

Figure 4 is an enlarged exploded perspective view of a damper shown in Figure 2;

Figure 5 is an enlarged longitudinal sectional view of the damper shown in Figure 4;

Figures 6A and 6B are longitudinal sectional views each the same as Figure 5, but showing deformation states of the damper when the frame is subjected to vertical and right-to-left vibrations, respectively;

Figure 7 is a schematic view showing a test vibration system for the optical disc player of Figure 2;

Figure 8 is a graph showing vibration transfer and antivibration characteristics of the optical disc player of Figure 2 when subjected to a test described with reference to Figure 7;

Figure 9 is a schematic perspective view showing a comparative example using dampers of gelatinous polybutadine in the optical disc player of Figure 2; and

Figure 10 is a graph showing test results for the comparative example of Figure 9 in the same manner as in Figure 8.

An optical disc player embodying the invention will now be described with reference to the accompanying drawings.

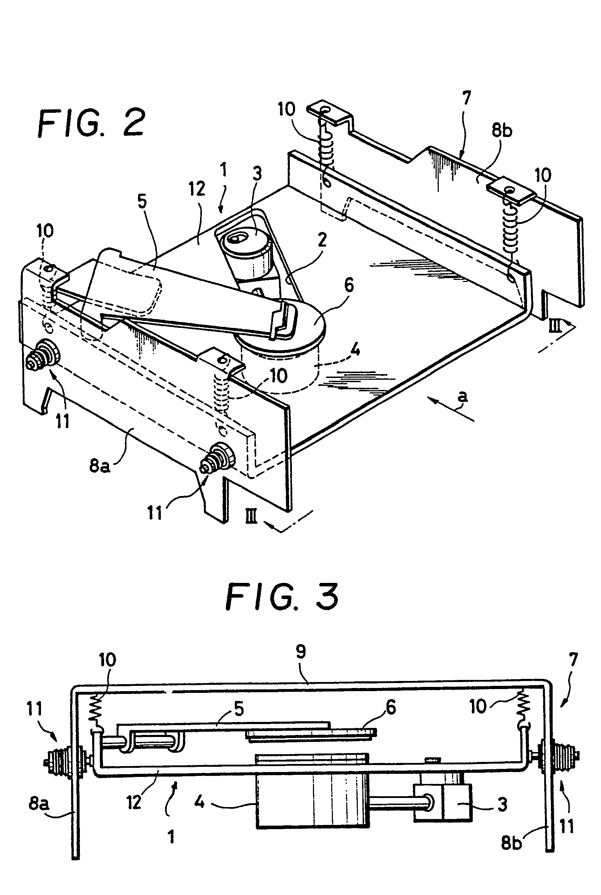

First, a mechanism deck 1 and a frame 7 of the player will be generally described with reference to Figures 2 and 3. The mechanism deck 1 comprises a chassis 12 on which are mounted an optical pickup 3 which is moved along a guide hole 2 formed in the chassis 12, and a spindle motor (i.e. a disc table) 4 for driving a disc placed on the table and the like. A disc inserted from a direction indicated by an arrow *a* is chucked and loaded on the spindle motor 4 by a chucking arm 5 and a disc chuck 6. The chucking arm 5 can be raised, and the disc chuck 6 is rotatably mounted at the extreme end of the chucking arm 5.

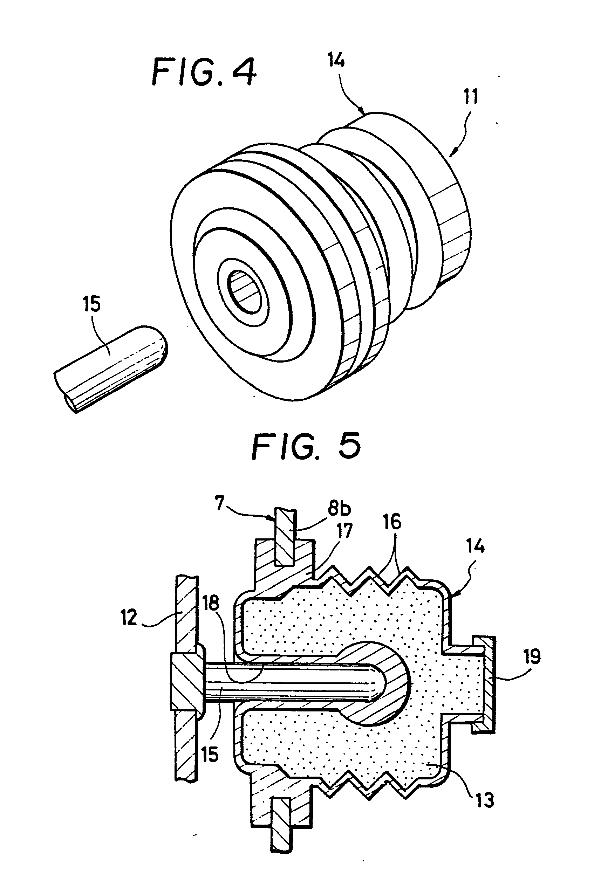

The frame 7, which is mounted on a housing (not shown), has an inverted U-shaped structure comprising a pair of side plates 8a and 8b and a transverse connecting member 9 (shown only in Figure 3) connecting the side plates 8a and 8b. The chassis 12 of the mechanism deck 1 is suspended from the frame 7 by four coil springs 10. More specifically, the mechanism deck 1 is supported horizontally by the coil springs 10 at four equal load points with respect to the centre of gravity. The mechanism deck 1 is engaged with vessels 14 of dampers 11 (shown in more detail in Figures 4 and 5) mounted in the side plates 8a and 8b of the frame 7. The weight of the mechanism deck 1 is supported by the coil springs 10, so the weight does not act substantially on the dampers 11. Since the mechanism deck 1 is suspended from the frame 7 by the coil springs 10, a natural frequency fO along the transverse direction (i.e. the horizontal direction) can be minimised.

As shown in Figures 4 and 5, each damper 11 comprises a vessel 14 mounted in the side plate 8b or 8a and defining a compartment filled with silicone oil (a viscous fluid) 13, and a rod 15 fixed to the chassis 12 and firmly fitted in the vessel 14. The vessel 14 comprises a thin flexible cylindrical bag with a bellows 16 which is made of silicone rubber or butyl rubber. A flange 17 at the front portion of the bag is engaged with the side plate 8b or 8a. An engaging recess or hole 18 is formed in a horizontally inwardly extending portion at the centre of the front portion of the vessel 14 and the rod 15, fixed to the chassis 12, is firmly fitted in the engaging recess or hole 18. By engaging the rod 15 with the vessel 14, the chassis 12 and hence the mechanism deck 1 are coupled to the frame 7 through the flexible vessel 14 and the silicone oil (viscous fluid) 13. After the vessel 14 is filled with the silicone oil 13, a rear cover 19 is welded on to seal the vessel 14. In this embodiment, the viscosity of the silicone oil 13 is 1,250 Pa.s [12,500 cP (centipoises)].

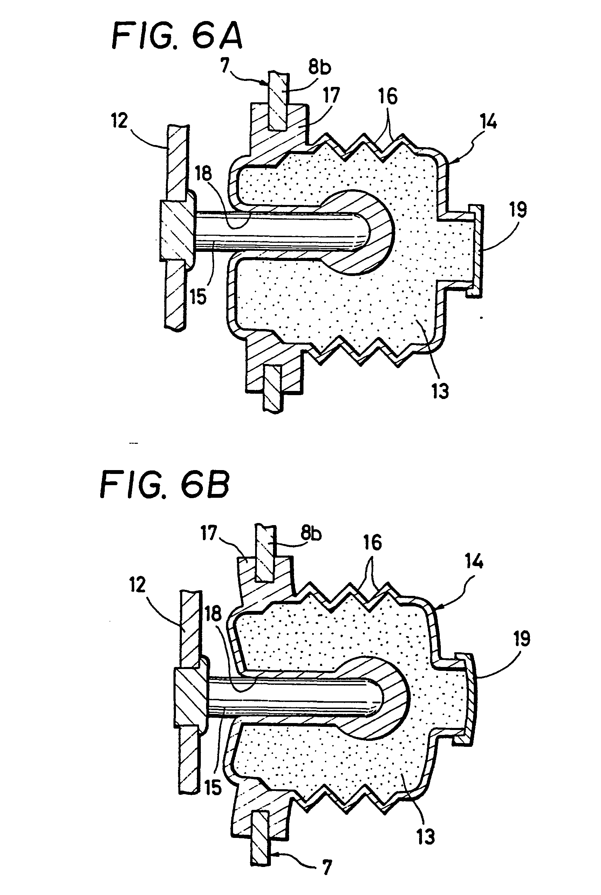

The operation of the damper 11 will be described with reference to Figures 6A and 6B. When the frame 7 is vibrated vertically, e.g. moved downwardly, the vessel 14 is also moved downwardly, as shown in Figure 6A. In this case, the corresponding rod 15 of the chassis 12 may be made to move downwardly. However, since the surface of the vessel 14 is thin and flexible, the rod 15 will not move substantially. Therefore, only the vessel 14 is deformed and moved downwardly. As a result, part of the silicone oil 13 in the vessel 14 is moved from a portion of the vessel 14 above the rod 15 to another portion below the rod 15. Since the silicone oil 13 is moved inside the vessel 14, a fluidic resistance occurs to absorb the vibration acting on the frame 7. Vibration transfer to the mechanism deck 1 can thus be limited.

When the frame 7 is moved backwards and forwards (in the direction indicated by the arrow *a* in Figure 2), the same damping effect as in the case of vertical vibrations (perpendicular to the arrow *a* in Figure 2) shown in Figure 6A occurs, except that the longitudinal sectional view of Figure 6A is replaced by a cross-sectional view. When the frame 7 is vibrated to the right and left, the vessel 14 is deformed as shown in Figure 6B. Vibrations acting externally on the frame 7 can be substantially absorbed in the same manner as the vertical vibrations described above.

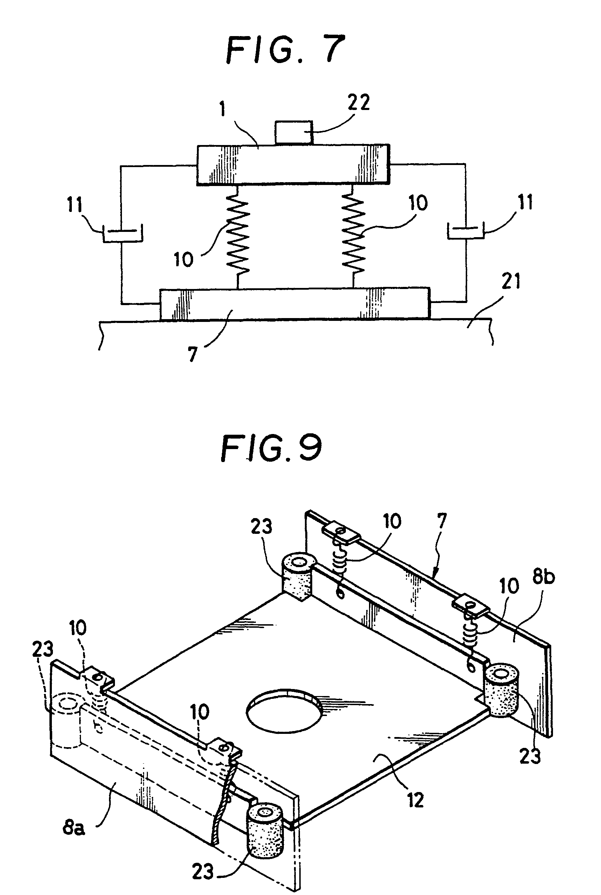

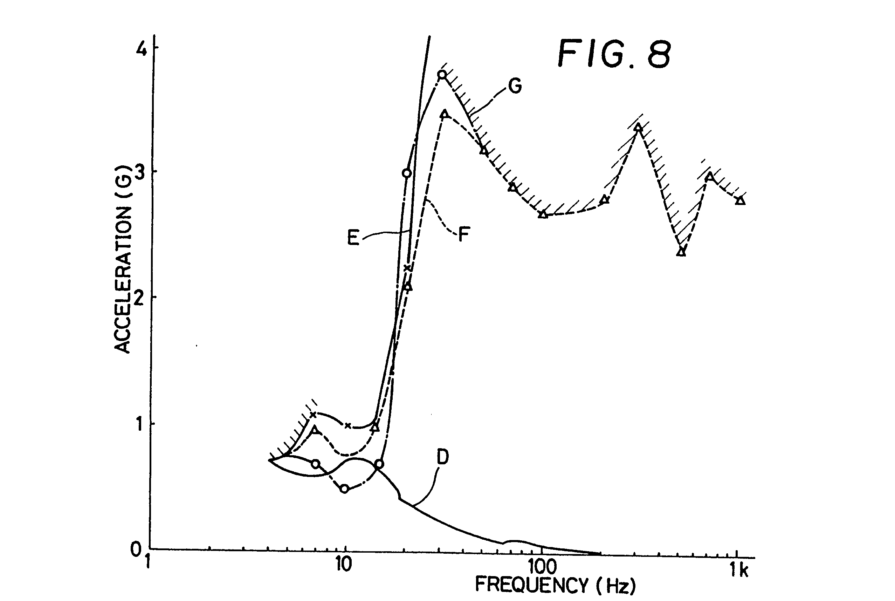

Vibration test results for the optical disc player embodying the invention as described above will now be described with reference to Figures 7 and 8. A test was carried out in which the vibration system shown in Figure 7 was placed on a vibrator 21, a vibration force producing an acceleration of 0.5G was applied to the vibration system, and vibrations of the mechanism deck 1 were measured by a pickup 22 arranged on the chassis 12. A curve D in Figure 8 shows vibration transfer characteristics along the vertical, back-and-forth (backwards and forwards along the direction indicated by the arrow *a* in Figure 2), and right-and-left (horizontal directions perpendicular to the arrow *a* in Figure 2) directions. As shown in Figure 8, although a moderately high Q value is encountered near a resonant region 10, the damping effect achieved is far greater than in the case of Figure 1.

Curves E, F and G in Figure 8 are antivibration curves representing the limits of sound omissions along the vertical, back-and-forth, and right-and-left directions. These curves show the limits of external Gs acting on the frame 7 to cause sound omissions. The hatched portions of the curves F and G in Figure 8 are indefinite portions caused by structural limitations of the measuring instruments and the test object of interest. The values to be plotted in these hatched regions may be higher than those plotted in Figure 8. Vertical vibrations at a frequency of 20 Hz cause sound omissions when a vibration force producing an acceleration of about 2.2G or more acts on the frame 7. No substantial sound omissions occur for a vibration force corresponding to a frequency of 30 Hz or more.

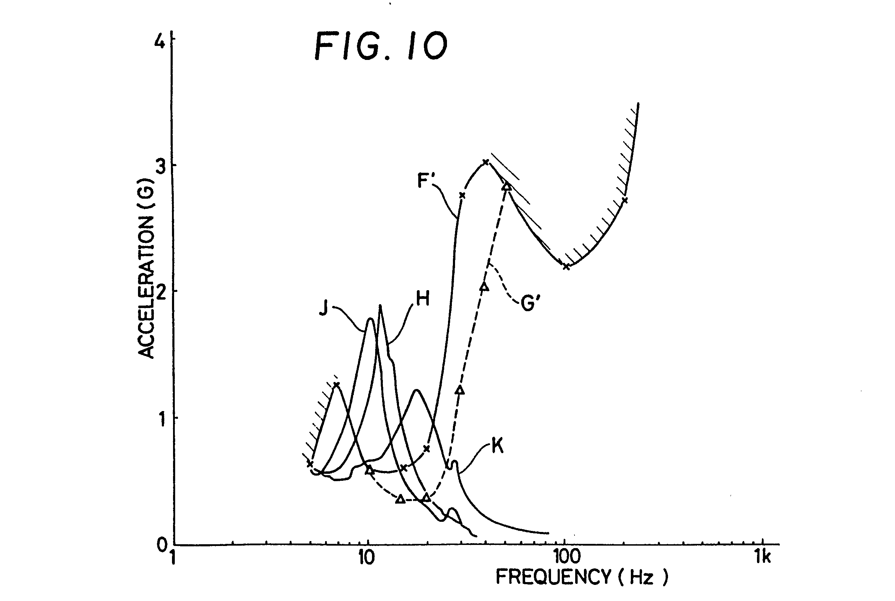

Figure 9 shows a comparative example (that is, an example devised for purposes of comparison, rather than an exemplification of the prior art) wherein the coil springs 10 are not replaced but the dampers 11 are replaced with other dampers than the dampers 11 employed in the embodiment of Figure 2. Each damper in Figure 9 comprises a gelatinous polybutadiene cylinder 23 inserted between the mechanism deck 1 and frame 7. The same test results as in Figure 8 are obtained for the comparative example, as shown in Figure 10. Curves H, J and K in Figure 10 show vibration transfer characteristics along the vertical, back-and-forth and right-and-left directions, respectively. Curves F′ and G′ represent antivibration characteristics along the back-and-forth and right-and-left directions, respectively. The limits of the Q value and sound omissions in the resonant region according to the embodiment of Figure 8 are evidently much better than those in the comparative example of Figure 10.

The damper 11 used in the above-described embodiment is different from a conventional damper having a vessel with two compartments. The damper 11 uses a vessel 14 with only one compartment. The viscous fluid 13 in this compartment is shifted to utilise fluidic resistance. Therefore, the vessel 14 of the damper 11 is compact, but can absorb a large vibration force.

The bag constituting the vessel 14 is made of a flexible material having a large internal loss. The rod 15 is neither acted on by external forces nor moved together with the flow of the fluid. The resistance caused by the deformation of the bag clearly plays an important role in absorbing external vibrations. Therefore, although the damper of this embodiment is compact, it can absorb a large vibration force.

In practice, the silicone oil 13, having a viscosity of 1,250 Pa.s [12,500 cP], fills the vessel 14 made of silicone rubber to constitute the damper. The viscosity of the fluid filling the vessel 14 may be changed, or the material of the vessel 14 may be replaced with another material, so that the resonant region can be shifted or the slope of the Q curve can be modified. Therefore, the antivibration characteristics of the optical disc player can be made compatible with the vibration characteristics of the moving object in which the optical display player is mounted.

In the above embodiment, the coil springs are used as elastic support means for supporting the chassis (or which are mounted an optical pickup, a disc table, etc.) on the frame. However, the elastic means may comprise an elastic member of another solid material, such as a leaf spring or a rubber cylindrical support.

According to the embodiment of the invention described above, the mechanism deck (the unit obtained by mounting the optical pickup, a disc table and the like on the chassis) acting as the player unit is supported by the frame through elastic support means such as coil springs. At the same time, vessels filled with viscous fluid are provided at one of the frame and the chassis. The movable members are provided on the other of the frame and the chassis and are arranged in the viscous fluid, so that the resistance produced between the viscous fluid and the movable members absorbs external vibrations. Therefore, compared with conventional damping mechanisms using only rubber dampers, the Q curve has a moderate slope in the resonant region, thus improving antivibration characteristics and substantially preventing sound omissions.

**Claims**

1. An optical disc player having a chassis (12) which is disposed in a horizontal plane and on which an optical pickup (3) and a disc table (4) are mounted, a frame (7), and a plurality of elastic support means (10) resiliently supporting the chassis (12) on the frame (7) such that the chassis is displaceable relative to the frame in all directions, the player being characterised by a damper (11) for absorbing vibrations from the frame (7), the damper (11) comprising:

a rod (15) projecting horizontally from one of the chassis (12) and frame (7); and

a vessel (14) which is made of rubber and defines a compartment that is filled with silicone oil (13) and sealed, the vessel (14) having a portion that extends horizontally inwardly into the compartment and is surrounded by the silicone oil, said portion having a hollow interior that defines a recess (18) receiving the rod (15), and the vessel (14) having a flange (17) which is fixed to the other of the chassis (12) and frame (7), whereby the rod (15) is movable in the silicone oil (13) in all directions together with said portion of the vessel in which the rod is received.

2. An optical disc player according to claim 1, wherein the vessel (14) is made of silicone rubber.

3. An optical disc player according to claim 1 or claim 2, wherein the vessel (14) has a bellows (16) on an outer surface thereof.

4. An optical disc player according to claim 1, claim 2 or claim 3, wherein the elastic support means (10) comprises coil springs.

## Patentansprüche

1. Abspielgerät für optische Platten
mit einem in einer horizontalen Ebene angeordneten Chassis (12), auf dem ein optischer Abtaster (3) und ein Plattenteller (4) montiert sind,
mit einem Rahmen (7)
sowie mit mehreren elastischen Haltemitteln (10), die das Chassis (12) derart elastisch an dem Rahmen (7) halten, daß das Chassis relativ zu dem Rahmen in allen Richtungen bewegbar ist, gekennzeichnet durch
einen zur Absorption von Vibrationen des Rahmens (7) dienenden Dämpfer (11) mit
einem Stab (15), der aus einem der beiden aus dem Chassis (12) bzw. dem Rahmen (7) bestehenden Teile in horizontaler Richtung heraussteht,
und einem Behälter (14) aus Gummi, der eine mit Silikonöl (13) gefüllte und dicht verschlossene Kammer begrenzt und einen horizontal in diese Kammer hineinragenden und von dem Silikonöl umgebenen Abschnitt besitzt mit einem hohlen Innenraum, der eine Ausnehmung (18) für die Aufnahme des Stabes bildet, wobei der Behälter (14) einen Flansch (17) hat, der an dem anderen der beiden aus dem Chassis (12) bzw. dem Rahmen (7) bestehenden Teile befestigt ist, wodurch der Stab (15) in dem Silikonöl (13) zusammen mit dem ihn aufnehmenden Abschnitt des Behälters (14) in allen Richtungen bewegbar ist.

2. Abspielgerät nach Anspruch 1, bei dem der Behälter (14) aus Silikongummi besteht.

3. Abspielgerät nach Anspruch 1 oder 2, bei dem ein Teil der Außenfläche des Behälters (14) als Balgen (16) ausgebildet ist.

4 Abspielgerät nach Anspruch 1, 2 oder 3 bei dem die elastischen Haltemittel (10) Schraubenfedern beinhalten.

## Revendications

1. Lecteur de disque optique ayant un châssis (12) qui est placé dans un plan horizontal et sur lequel sont montés un capteur optique (3) et une table (4) de support de disque, un cadre (7) et plusieurs dispositifs (10) de support élastique qui supportent élastiquement le châssis (12) sur le cadre (7) afin que le châssis puisse se déplacer par rapport au cadre dans toutes les directions, le lecteur étant caractérisé par un amortisseur (11) destiné à absorber les vibrations provenant du cadre (7), l'amortisseur (11) comprenant:
une tige (15) dépassant horizontalement du châssis (12) ou du cadre (7), et
un récipient (14) qui est formé de caoutchouc et qui délimite un compartiment qui est rempli d'une huile de silicone (13) et qui est scellé, le récipient (14) ayant une partie disposée horizontalement vers l'intérieur du compartiment et qui est entourée par l'huile de silicone, cette partie ayant un intérieur creux qui délimite une cavité (18) logeant la tige (15), le récipient (14) ayant un flasque (17) qui est fixé au cadre (7) ou au châssis (12) respectivement, la tige (15) pouvant se déplacer dans l'huile de silicone (13), dans toutes les directions, avec ladite partie du récipient dans laquelle elle est logée.

2. Lecteur de disque optique selon la revendication 1, dans lequel le récipient (14) est formé d'un caoutchouc de silicone.

Lecteur de disque optique selon la revendication 1 ou 2, dans lequel le récipient (14) a un soufflet (16) à sa surface externe.

4. Lecteur de disque optique selon la revendica-tion 1, 2 ou 3, dans lequel le dispositif élastique de support (10) comporte des ressorts hélicoïdaux.

# FIG. 1

# FIG. 2

# FIG. 3

# FIG. 4

14

11

15

# FIG. 5

7    8b
17
16
14

12
18

15

19

13

3

## FIG. 6A

## FIG. 6B

## FIG. 7

## FIG.9

FIG. 8

FIG. IO

EP 0 176 602 B1